# EUROPEAN PATENT SPECIFICATION

(11) **EP 2 816 831 B1**
(45) Date of publication and mention of the grant of the patent: **04.09.2019**
(21) Application number: 13305847.9
(22) Date of filing: 21.06.2013
(51) Int. Cl.: H04W 8/26

(54) **METHOD, COMPUTER PROGRAM AND APPARATUS FOR IDENTIFYING A MOBILE TERMINAL IN A MOBILE COMMUNICATION SYSTEM**
VERFAHREN, COMPUTERPROGRAMM UND VORRICHTUNG ZUR IDENTIFIZIERUNG EINES MOBILEN ENDGERÄTS IN EINEM MOBILEN KOMMUNIKATIONSSYSTEM
PROCÉDÉ, PROGRAMME INFORMATIQUE ET APPAREIL POUR IDENTIFIER UN TERMINAL MOBILE DANS UN SYSTÈME DE COMMUNICATION MOBILE

(43) Date of publication of application: 24.12.2014
(73) Proprietor: Alcatel Lucent, 91620 Nozay (FR)
(72) Inventor: Stanze, Oliver, 70435 Stuttgart (DE); Doll, Mark, 70435 Stuttgart (DE); Doetsch, Uwe, 70435 Stuttgart (DE)
(74) Representative: Novagraaf Technologies

(56) References cited:
- EP-A1- 2 375 805
- US-A1- 2011 077 038
- US-A1- 2013 089 034
- BOCCARDI F ET AL: "User-centric architectures: Enabling CoMP via hardware virtualization", PERSONAL INDOOR AND MOBILE RADIO COMMUNICATIONS (PIMRC), 2012 IEEE 23RD INTERNATIONAL SYMPOSIUM ON, IEEE, 9 September 2012 (2012-09-09), pages 191-196, XP032272859, DOI: 10.1109/PIMRC.2012.6362667 ISBN: 978-1-4673-2566-0

## Description

### Technical Field

Embodiments relate to a method, a computer program and an apparatus for identifying a mobile terminal in a mobile communication system.

### Background

During the last years Coordinated Multi-Point (CoMP) techniques have been extensively studied to improve the received signal quality and to reduce co-channel interference by exploiting transmission/reception (Tx/Rx) from multiple Transmission Points (TPs). As a matter of fact current 4^{th} Generation (4G) systems have not been built around the CoMP concept, in the same way 3^{rd} Generation (3G) systems had not been built around the Multi-Input Multi-Output (MIMO) concept. One idea is that future wireless systems could be built around CoMP in the same way 4G systems have been built around MIMO.

It has been observed that a common assumption across the different CoMP proposals in the literature is an architectural design based on
- a static allocation of groups of TPs (cells) to the same Base Band Unit (BBU);
- a logical Central Unit (CU) in charge e.g. of channel estimation, scheduling, clustering, beamforming, detection and decoding.

In the following this architecture will be referred to as cell-centric architecture. Thereby, a cell traditionally denotes a coverage area which is served by precisely one fixed-location transceiver, often referred to as a cell site or base station. In a cellular network, each cell has an individual cell-ID and typically uses a different set of radio resources from neighboring cells, to avoid interference and provide guaranteed bandwidth within each cell. The notion of cells also applies to sectorized cells. That is to say, also a cell sector served by a dedicated transceiver traditionally also is to be understood as an individual cell.

A possible approach to implement CoMP would involve a complicated allocation of the tasks logically assigned to the central units, to different BBUs, in charge of the different cells in the coordination pool.

A different approach for future wireless systems is inspired by the following three trends observed in the academic and industrial literature for future radio access networks,
- Tomorrow's BBUs may be realized by implementing more and more functionalities as software running on multi-core General Purpose Processors (GPPs).
- Full and partial hardware pooling may be implemented by distributing radio hardware resources strategically across the network.
- Virtualization techniques may be used to dynamically allocate computational resources in the pool to different radio tasks.

Building on this framework, an architectural solution for CoMP-based systems has been proposed in F. Boccardi et al.: "User-centric architectures: Enabling CoMP via hardware virtualization", PIMRC 2012. The underlying idea is to dynamically allocate virtual processing resources to sets of TPs, wherein these processing resources may be used for jointly transmitting to (or receiving from) a given set of users. Thereby a given TP may be allowed to be dynamically associated to different TP sets and accordingly dynamically allocated to different sets of processing resources. In other words, virtual resources in the BBU may be dynamically allocated to CoMP clusters, in a way proportional to the cluster load. That concept replaces the convention of the cell as the elementary processing unit with the generalized notion of the Transmission Point Cluster (TPC), i.e. the set of TPs dynamically allocated to serve a user or set of users or mobile terminals. In the following this architecture will also be referred to as user-centric architecture.

Hence, user-centric radio access may be a novel concept for radio access in future mobile networks. In case of user-centric radio access, the concept of cells vanishes. Each user or mobile terminal is served by a user-specific set of transmissions points instead of a single cell/eNodeB. By design user-centric radio access supports/enables Uplink/Downlink CoMP schemes and seamless mobility.

Current addressing schemes are based on the concept of identifiers which are unique within a cell, e.g. in case of Long-Term Evolution (LTE) the so-called Cell-specific Radio Network Temporary Identifier (C-RNTI) is used to identify mobile terminals, which are also referred to as User Equipment (UE) according to the 3rd Generation Partnership Project (3GPP) terminology. The C-RNTI is a conventional mobile terminal identifier allocated by a controlling Radio Network Controller (RNC) and it is unique within one cell controlled by the allocating RNC. C-RNTI can be reallocated when a mobile terminal or UE accesses a new cell with a cell update procedure. As the concept of cells does not exist anymore in case of user-centric radio access, a novel addressing scheme is desirable.

One solution could be to use conventional radio link identifiers which uniquely identify a user, e.g. the International Mobile Subscriber Identity (IMSI). However, this approach has several drawbacks - mainly related to efficiency and security/privacy. To uniquely identify a user, the corresponding identifier has to be quite long. If this long identifier has to be used on the air interface this may be quite inefficient. Furthermore, due to security/privacy reasons, 3GPP has defined the requirement for user identity confidentiality that is fulfilled by employing a locally unique temporary instead of a globally unique permanent identity.

Another approach using a concept of virtual cells is presented in EP 2 375 805 A1. Document US 2013/0089034 A1 relates to a user equipment associating with different base stations for its uplink and downlink communications. Document US 2011/0077038 A1 discloses generating a shared initialization code for physical channel data scrambling in an LTE Advanced coordinated multipoint transmission network.

Hence, to fully exploit the advantages of user-centric radio access an improved addressing scheme for identifying the mobile terminals is desirable.

### Summary

The invention is defined by independent claims 1, 9 and 10. In the following, parts of the description and drawings referring to embodiments which are not covered by the claims are not presented as embodiments of the invention, but as examples useful for understanding the invention.

According to a first aspect embodiments provide a method for identifying a mobile terminal in a mobile communication system as specified in claim 1.

According to a further aspect embodiments also provide an apparatus for identifying a mobile terminal in a mobile communication system as according to claim 10.

In some embodiments the apparatus may be, may be comprised by, or may be coupled to a network addressing area or a mobility management entity of the mobile communication system or network. Thereby the aim of mobility management is to track where mobile terminals are, allowing mobile phone services to be delivered to them from the network. Hence, the above method may be performed by such a network mobility management entity, for example. In some embodiments the apparatus may additionally or alternatively coupled to a load balancing entity of the mobile communication system for distributing workloads across multiple transmission points or BBUs coupled thereto of the addressing area. In some embodiments different addressing areas may directly communicate with each other without involving a mobility management entity.

Some embodiments comprise a digital control circuit installed within the above apparatus. Such a digital control circuit, e.g. a digital signal processor (DSP), an Application-Specific Integrated Circuit (ASIC), or a general purpose processor, needs to be programmed accordingly. Hence, yet further embodiments also provide a computer program having a program code for performing embodiments of the method, when the computer program is executed on a programmable hardware device, e.g. a computer or a digital processor.

According to embodiments a user or mobile terminal may be served by a user-specific set of transmissions points (transceivers) instead of only a single transceiver corresponding to a single traditional cell/eNodeB, like in conventional mobile communications systems. That is to say, the traditional concept of cells vanishes according to embodiments.

In some embodiments a transmission point may correspond to a Remote Radio Head (RRH), which may be regarded as a radio front-end, i.e., which receives and transmits actual radio signals. Accordingly, a RRH may, for example, comprise a radio transceiver conformant to the mobile communication system. In the following, two directions of transmission will be considered. The first one is referred to as downlink or forward link. It refers to a transmission from the Radio Access Network (RAN), i.e. the transmission point, to a mobile terminal or User Equipment (UE) in the addressing area, which also corresponds to a common geographical coverage area of the set of transmission points. The second one is referred to as uplink or reverse link. It refers to a transmission from a mobile terminal to the RAN, i.e. the RRH. In the uplink a transmission point may convert received radio signals from a transmission-band to baseband receive signals and provide the baseband receive signals to one or more associated Base Band Units (BBUs). In the downlink the transmission point may convert a baseband transmit signal, which has been processed in the BBUs, to the transmission-band and transmit the signal using one or multiple antennas. That is to say, a transmission point may be coupled to one or more BBUs for exchanging complex valued digital baseband data between the BBU and the transmission point. For that purpose, an interface known as Common Public Radio Interface (CPRI) or future derivatives thereof may be used, for example.

To enable the mobile communication system or one or more BBUs thereof to address a specific transmission point, e.g. currently serving a user, different transmission points of the set of transmission points may have associated therewith different transmission point identifiers. That is to say, a first transmission point and a second transmission point of the set of transmission points may have assigned thereto different transmission point identifiers.

In embodiments mobile terminal identifiers, i.e. UE IDs, are valid for a set of transmission points. That is to say, multiple transmission points of the set can identify a certain mobile terminal or UE residing in the coverage area of the transmission point set by the same identifier. This is different to the conventional addressing schemes, e.g. of LTE-Advanced (LTE-A), in which a UE ID is valid only in a certain cell, i.e. for one single base station transceiver. The validity of a UE ID for a set of transmission points results in a validity of a UE ID inside a certain area, i.e. the addressing area, which might be significant bigger than the area of a single cell. Further it allows addressing the UE by different transmission points of the set at the same time or subsequently without any cumbersome conventional handover procedures.

Further UE IDs may be unique within a certain scope. Inside the scope around the transmission points or transmission point sets which assign a certain ID to a UE it is guaranteed that this ID is unique and not assigned by other transmission points to other UEs. The scope of a UE ID may be significantly larger than the transmission range of the transmission points which assign the corresponding UE ID. Hence, the notion of the scope of a mobile terminal identifier is similar to the conventional notion of frequency reuse factor, which denotes the rate at which the same frequency can be used in a cellular network. Hence, in embodiments the scope of a mobile terminal identifier denotes the rate at which the same UE identifier can be used in a different addressing area. A scope value smaller than one means, that the same identifier cannot be used in a directly adjacent addressing area. That is to say, sets of UE identifiers of adjacent or overlapping addressing areas may be disjoint. Thereby two sets are said to be disjoint if they have no element in common.

According to the invention mobile terminals have multiple IDs at the same time. The mobile communication system comprises a further set of a plurality of transmission points for communicating with the mobile terminal in a further addressing area which is adjacent or next to the addressing area. A further identifier is assigned or associated to the mobile terminal for addressing the mobile terminal from any of the transmission points comprised by the further set of transmission points, when the mobile terminal resides in the further addressing area, and wherein the further identifier is different from the identifier. The addressing area and the further addressing area geographically overlap each other and hence have an overlapping addressing area, wherein the mobile terminal has assigned thereto the identifier and the further identifier simultaneously when residing in the overlapping addressing area. That is to say, in this case (i.e. in the overlapping addressing area) the mobile terminal can be addressed by multiple IDs at the same time.

While the mobile terminal resides in the overlapping addressing area, the transmission points comprised by the set (of transmission points) may be informed of the further identifier and the transmission points comprised by the further set (of transmission points) may be informed of the identifier. That is to say, the transmission points which are used to serve a certain UE know its currently used IDs, even if one or multiple of these IDs have been assigned to the UE by other transmission points. For example, the transmission points comprised by the set and the further set may be informed of the two identifiers by a network entity, e.g. a mobility management entity.

Moreover, the mobile terminal address or identifier which is used can be changed on Transmission Time Interval (TTI) basis in embodiments. That is to say, a transmission point may be changed within the transmission point set from a first transmission point of the set communicating with the mobile terminal during a first TTI to a second transmission point of the set communicating with the mobile terminal during a subsequent second TTI. Thereby the TTI is a parameter in digital telecommunication networks related to encapsulation of data from higher layers of the protocol stack into frames for transmission on the radio link layer. TTI refers to the duration of a transmission on the radio link. The TTI is related to the size of the data blocks passed from the higher network layers to the radio link layer.

Embodiments particularly allow for an easy realization of CoMP and seamless mobility in case of user centric radio access.

Further embodiments are subject-matter of the dependent claims and/or the following detailed description of some exemplary embodiments.

### Brief description of the Figures

Some embodiments of apparatuses and/or methods will be described in the following by way of example only, and with reference to the accompanying figures, in which
- Fig. 1: schematically illustrates a mobile communication system comprising a first set of transmission points for communicating with a mobile terminal in a first addressing area covered by the first set and a second set of transmission points for communicating with the mobile terminal in a second addressing area covered by the second set, according to an embodiment; and
- Fig. 2: illustrates a flow chart of an exemplary method for identifying a mobile terminal in a mobile communication system.

### Detailed Description

Various example embodiments will now be described more fully with reference to the accompanying drawings in which some example embodiments are illustrated. In the figures, the thicknesses of lines, layers and/or regions may be exaggerated for clarity.

Accordingly, embodiments are shown by way of example in the figures and will herein be described in detail. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art.

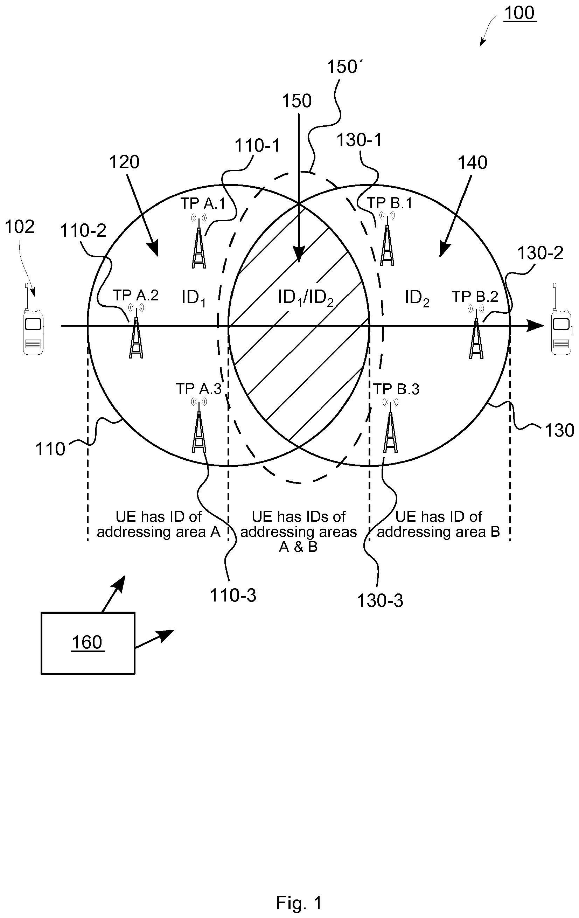

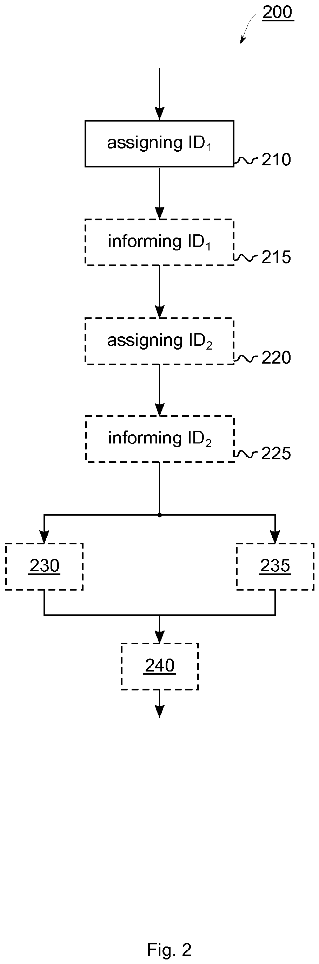

Turning now to Figs.1 and 2, an exemplary embodiment of a method 200 (Fig. 2) for identifying a mobile terminal 102 in a mobile communication system 100 (Fig. 1) will be described.

The schematic and exemplary mobile communication system 100 shown in Fig. 1 comprises a first set 110 of a plurality of first transmission points 110-1 to 110-3 for communicating with the mobile terminal 102 in a first addressing area 120 covered by the first set 110 of transmission points 110-1 to 110-3.

As illustrated in Fig. 2, the method 200 comprises an act 210 of assigning or allocating a first identifier, i.e. an ID₁, to the mobile terminal 102 for addressing the mobile terminal 102 from any of the first transmission points 110-1 to 110-3 comprised by the first set 110 when the mobile terminal 102 resides in the first addressing area 120. Also, the first transmission points 110-1 to 110-3 may be informed about the first identifier ID₁ which was assigned to the moving mobile terminal 102, see optional act 215. Thereby the assigning 210 and the informing 215 of the first identifier ID₁ may e.g. be performed by a network entity 160, e.g. a mobility management entity, of the mobile communication system or network 100. This means that the network entity 160 may be regarded as an apparatus for identifying a mobile terminal 102 in the mobile communication system 100.

As has been explained before, the mobile communication system 100 according to embodiments does not rely on the concept of traditional cells like in conventional mobile or cellular communications systems, where a radio cell is traditionally served by a single transmission point, respectively, such as, e.g. a RRH. That is to say, here the traditional concept of radio cells vanishes. According to embodiments, the plurality of first transmission points 110-1 to 110-3, which may be coupled to BBUs (not shown) and may all have assigned first individual transmission point identifiers, serve a common coverage or addressing area 120 in which the mobile terminal 102 is assigned a first addressing-area-specific terminal address or identifier ID₁ from a first set of addressing-area-specific terminal identifiers. Hence, if the first addressing area 120 was compared to a traditional cell, the "cell" would be served by a plurality of transmission points, in contrast to the conventional approach, where a cell is served by a single transmission point or transceiver.

Within the first transmission point set 110 a transmission point (which is currently communicating with the mobile terminal 102) may be changed from a first transmission point of the set 110, which is communicating with the mobile terminal 102 during a first TTI, to a second transmission point of the set 110, which is communicating with the mobile terminal 102 during a subsequent second TTI. Hence, such a change of the transmission point may be performed without any cumbersome and signaling intense handover procedure on TTI basis, as e.g. the transmission point 110-1 may address the mobile terminal 102 by means of the same identifier ID₁ as the other transmission points 110-2 or 110-3 of the same transmission point set 110.

As illustrated by Fig. 1, the mobile communication system 100 also comprises a further, second set 130 of a plurality of second transmission points 130-1 to 130-3 for communicating with the mobile terminal 102 in a further, second addressing area 140, which is adjacent or next to the first addressing area 120. Although not restricted thereto, the first set 110 and the second set 130 may form disjoint sets of transmission points in some embodiments. That is to say, no transmission point 110-1 to 110-3 of the first addressing area 120, i.e., using the first identifier ID₁, is at the same time a transmission point of the second addressing area 140, i.e., using a second identifier ID₂, and vice versa. In a further embodiment the sets 110, 130 which form a certain addressing range, respectively, may be not disjoint, i.e., a certain transmission point may belong to multiple addressing areas at the same time. This may make address management (assigning of address space to addressing areas) more complex but may have advantages for enabling seamless mobility.

The method 200 also comprises an act 220 of assigning a further, second identifier (e.g. ID₂) to the mobile terminal 102 for addressing the mobile terminal 102 from or by any of the second transmission points 130-1 to 130-3 comprised by the second set 130 when the mobile terminal 102 resides or is located in the second addressing area 140. Thereby the second identifier ID₂ is different from the first identifier ID₁. That is to say, the first set of addressing-area-specific terminal identifiers is disjoint from a second set of addressing-area-specific terminal identifiers used in the second addressing area 140. Hence, the second identifier ID₂ is assigned from a set of identifiers which is disjoint from a set of identifiers used in the adjacent first addressing area 120 associated to the first set 110 of transmission points 110-1 to 110-3. Also, the second transmission points 130-1 to 130-3 may be informed about the second identifier ID₂ which was assigned to the moving mobile terminal 102 in second addressing area 140, see optional act 225. Again, the assigning 220 and the informing 225 of the second identifier ID₂ to the mobile terminal 102 may e.g. be performed by the network entity 160.

As can be seen from Fig. 1, the first addressing area 120 and the second addressing area 140 geographically overlap each other and, hence, also have an overlapping addressing area 150. Therefore, according to the invention, the mobile terminal 102 has assigned thereto the first identifier ID₁ and the second identifier ID₂ simultaneously, i.e. at the same time, when residing in the overlapping addressing area 150. In other words, the method 200 comprises assigning the first identifier ID₁ and the second identifier ID₂ simultaneously to the mobile terminal 102 when it resides in the overlapping addressing area 150.

In other words, Fig. 1 exemplarily shows six transmission points (110-1 to 110-3 and 130-1 to 130-3). The transmission points 110-1 to 110-3 form or provide the first addressing area 120 and the transmission points 130-1 to 130-3 form or provide the second addressing area 140. As addressing area 140 lies inside the scope of addressing area 120 and vice versa, addressing area 120 and 140 assign disjoint sets of IDs to UEs. Addressing areas 120 and 140 are partially overlapping, i.e., there is a certain geographical area 150 in which the UE 102 be addressed by IDs of both addressing areas.

Fig. 1 also schematically illustrates a mobility scenario, wherein the mobile terminal 102 moves through the first and second addressing area 120 and 140. If the mobile terminal 102 enters the first addressing area 120, it will get assigned a first identifier ID₁ belonging to first addressing area 120. This enables one or multiple of the transmission points 110-1 to 110-3 to send data to or communicate with the mobile terminal 102. If the mobile terminal 102 enters the overlapping addressing area 150 it will get the second identifier ID₂ belonging to addressing area 140. Additionally the first transmission points 110-1 to 110-3 may be informed about the additional second identifier ID₂ of addressing area 140 which was assigned to the moving mobile terminal 102. Likewise, the second transmission points 130-1 to 130-3 may be informed about the first identifier ID₁ of addressing area 120 which was assigned to the mobile terminal 102. In other words, the method 200 may comprise an act 230 of informing the first transmission points 110-1 to 110-3 comprised by the first set 110 of the second identifier ID₂ and an act 235 of informing the second transmission points 130-1 to 130-3 comprised by the second set 130 of the first identifier ID₁. The latter acts 230, 235 may be performed while the mobile terminal 102 resides in the overlapping addressing area 150. So, while the mobile terminal 102 is located in the overlapping area 150, the mobile terminal 102 has one identifier (ID₁) of addressing area 120 and one identifier (ID₂) of addressing area 140, and the transmission points of area 120 and 140 may be informed about the two identifiers assigned to the mobile terminal 102, respectively, e.g. via network entity 160. This means that, while the mobile terminal 102 resides or stays in the overlapping addressing area 150, the mobile terminal 102 may be addressed from any of the transmission points 110-1 to 110-3 or 130-1 to 130-3 comprised by the first set 110 and/or the second set 130 of transmission points using the first or the second identifier ID₁, ID₂.

If the mobile terminal 102 leaves the overlapping addressing area 150 and enters the area which only belongs to addressing area 140 the mobile terminal 102 may release the first identifier (ID₁) belonging to the first addressing area 120 and may only maintain the second identifier (ID₂) of the second addressing area 140. Additionally the transmission points 130-1 to 130-3 of the second addressing area 140 may be informed that the first identifier (ID₁) of addressing area 120, which was previously assigned to the mobile terminal 102, is not valid anymore. In other words this means that, upon leaving the overlapping addressing area 150, the transmission points 110-1 to 110-3 of the first addressing area 120 may be informed in act 240 that the second identifier ID₂ is not valid anymore, if the mobile terminal then resides in the first addressing area 120, i.e., if the mobile terminal 102 has moved to the first addressing area 120 outside the overlapping addressing area 150. Likewise, the second transmission points 130-1 to 130-3 of the second addressing area 140 may be informed in act 240 that the first identifier ID₁ is not valid anymore, if the mobile terminal 102 then resides in the second addressing area 140, i.e., if the mobile terminal 102 has moved to the second addressing area 140 outside the overlapping addressing area 150. For example, the respective transmission points may be informed by the adequate mobility management entity 160 of the mobile communication system 100. Thereby embodiments may employ a temporal hysteresis, wherein transmission points of a certain addressing area are informed about the mobile entering or leaving said or an adjacent addressing area only after a certain time. That is to say, after a predetermined time after leaving the overlapping addressing area 150, the transmission points 110-1 to 110-3 of the first addressing area 120 may be informed in act 240 that the second identifier ID₂ is not valid anymore, if the mobile terminal then resides in the first addressing area 120, i.e., if the mobile terminal 102 has moved to the first addressing area 120 outside the overlapping addressing area 150. Likewise, the second transmission points 130-1 to 130-3 of the second addressing area 140 may be informed in act 240 that the first identifier ID₁ is not valid anymore after said predetermined time, if the mobile terminal 102 then resides in the second addressing area 140, i.e., if the mobile terminal 102 has moved to the second addressing area 140 outside the overlapping addressing area 150.

In other embodiments there may be an optional additional outer overlapping addressing area 150' comprising the overlapping addressing area 150 as inner overlapping addressing area. In this case the mobile terminal 102 leaves the inner overlapping addressing area 150 and enters outer overlapping addressing area 150' the mobile terminal 102 may stop using the first identifier (ID₁) belonging to the first addressing area 120 and may only use the second identifier (ID₂) of the second addressing area 140. However, as long as the mobile terminal 102 resides in the outer overlapping addressing area 150' the mobile terminal 102 may store the first identifier (ID₁) for repeated use in case the mobile terminal 102 returns to the inner overlapping addressing area 150. The same holds for the opposite moving direction.

In the following advantages of the embodiments are discussed based on the scenario shown in Fig.1:
- Simplified mobility management - As long a UE is located inside an addressing area the (set of) transmission point(s) which serve the UE can change on TTI level without requiring an ID change of the UE. This enables seamless mobility inside an addressing area. Due to the possibility of overlapping addressing area a UE may temporarily belong to multiple addressing areas. If it leaves one of these addressing areas it has still a valid ID of the remaining addressing area and therefore can be served by the transmission points of the corresponding addressing area. This enables seamless mobility between addressing areas.
- Simplified realization of CoMP: If a UE is located inside a single addressing area, e.g. addressing area 120, all transmission points of the addressing area know the ID of the UE and can send data to it. If the UE is located inside the overlapping addressing area 150, the UE has multiple IDs and these IDs are known to all transmission points belonging to the overlapping addressing areas 120, 140. This enables an easy realization of UE specific CoMP clusters. The UE might be served by arbitrary transmission points of the overlapping addressing areas and these transmission points may change on TTI level without requiring an ID change of the UE.

In a further embodiment more than two addressing areas may overlap, i.e., a mobile terminal may have more than two valid IDs at the same time.

Embodiments may further provide a computer program having a program code for performing the above method, when the computer program is executed on a computer or processor. A person of skill in the art would readily recognize that steps of various above-described methods may be performed by programmed computers. Herein, some embodiments are also intended to cover program storage devices, e.g., digital data storage media, which are machine or computer readable and encode machine-executable or computer-executable programs of instructions, wherein the instructions perform some or all of the acts of the above-described methods. The program storage devices may be, e.g., digital memories, magnetic storage media such as magnetic disks and magnetic tapes, hard drives, or optically readable digital data storage media. The embodiments are also intended to cover computers programmed to perform the acts of the above-described methods or (field) programmable logic arrays ((F)PLAs) or (field) programmable gate arrays ((F)PGAs), programmed to perform the acts of the above-described methods.

Functional blocks shall be understood as blocks comprising circuitry that is configured to perform a certain function, respectively. Hence, a "means for s.th." may as well be understood as a "means configured to or suited for s.th.". A means configured to perform a certain function does, hence, not imply that such means necessarily is performing the function (at a given time instant).

Functions of various elements shown in the figures may be provided through the use of dedicated hardware as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method (200) for identifying a mobile terminal (102) in a mobile communication system (100), the mobile communication system (100) comprising a first set (110) of a plurality of transmission points (110-1; 110-2; 110-3) for communicating with the mobile terminal (102) in a first addressing area (120) covered by the first set (110) of transmission points, the method (200) comprising:
assigning (210) a first identifier (ID₁) to the mobile terminal (102) for addressing the mobile terminal residing in the first addressing area (120) from any of the transmission points (110-1; 110-2; 110;3) comprised by the first set (110) of transmission points,
wherein the mobile communication system (100) comprises a second set (130) of a plurality of transmission points (130-1; 130-2; 130-3) for communicating with the mobile terminal (102) in a second addressing area (140) adjacent to the first addressing area (120), the method (200) further comprising:
assigning (220) a second identifier (ID₂) to the mobile terminal (102) for addressing the mobile terminal (102) from any of the transmission points (130-1; 130-2; 130-3) comprised by the second set (130) of transmission points, when the mobile terminal (102) resides in the second addressing area (140), and wherein the second identifier (ID₂) is different from the first identifier (ID₁),
wherein the first addressing area (120) and the second addressing area (140) geographically overlap each other and have an overlapping addressing area (150), wherein the method (200) further comprises
assigning (210; 220) the first identifier (ID₁) and the second identifier (ID₂) simultaneously to the mobile terminal (102) when it resides in the overlapping addressing area (150).

2. The method (200) of claim 1, wherein the first identifier (ID₁) is assigned from a set of identifiers which is disjoint from a set of identifiers used in the adjacent second addressing area (140) associated to the second set (130) of a plurality of transmission points (130-1; 130-2; 130-3).

3. The method (200) of claim 1, comprising changing a transmission point within the first set (110) from a first transmission point of the set (110) communicating with the mobile terminal (102) during a first transmission time interval to a second transmission point of the first set (110) communicating with the mobile terminal (102) during a subsequent second transmission time interval.

4. The method (200) of claim 1, wherein the first set (110) and the second set (130) form disjoint sets of transmission points.

5. The method (200) of claim 1, wherein the first set (110) and the second set (130) form overlapping sets of transmission points, wherein at least one transmission point of the first set or the second set belongs to both addressing areas.

6. The method (200) of claim 1, comprising:
while the mobile terminal (102) resides in the overlapping addressing area (150),
informing (230) the transmission points (110-1; 110-2; 110-3) comprised by the first set (110) of the second identifier (ID₂); and
informing (235) the transmission points (130-1; 130-2; 130-3) comprised by the second set (130) of the first identifier (ID₁).

7. The method (200) of claim 1, comprising:
while the mobile terminal (102) resides in the overlapping addressing area (150),
addressing the mobile terminal (102) from any of the transmission points (110-1; 110-2; 110-3; 130-1; 130-2; 130-3) comprised by the first set (110) and/or the second set (130) of transmission points using the first identifier (ID₁) or the second identifier (ID₂).

8. The method (200) of claim 1, comprising:
upon leaving the overlapping addressing area (150),
informing (240) the transmission points (110-1; 110-2; 110-3) of the first addressing area (120) that the second identifier (ID₂) is not valid anymore, if the mobile terminal (102) has moved in the first addressing area (120) outside the overlapping addressing area (150), or
informing (240) the transmission points (130-1; 130-2; 130-3) of the second addressing area (140) that the first identifier (ID₁) is not valid anymore, if the mobile terminal (102) has moved in the second addressing area (140) outside the overlapping addressing area (150).

9. Computer program comprising a program code operable to perform the method (200) of claim 1, when the computer program is run on a programmable hardware device.

10. Apparatus (160) for identifying a mobile terminal (102) in a mobile communication system (100), the mobile communication system (100) comprising a first set (110) of a plurality of transmission points (110-1; 110-2; 110-3) for communicating with the mobile terminal (102) in a first addressing area (120) covered by the first set (110) of transmission points, the apparatus (160) comprising:
an assigner configured to assign (210) a first identifier (ID₁) to the mobile terminal (102) for addressing the mobile terminal residing in the first addressing area (120) from any of the transmission points (110-1; 110-2; 110;3) comprised by the first set (110) of transmission points,
wherein the mobile communication system (100) comprises a second set (130) of a plurality of transmission points (130-1; 130-2; 130-3) for communicating with the mobile terminal (102) in a second addressing area (140) adjacent to the first addressing area (120),
wherein the assigner is configured to assign (220) a second identifier (ID₂) to the mobile terminal (102) for addressing the mobile terminal (102) from any of the transmission points (130-1; 130-2; 130-3) comprised by the second set (130) of transmission points, when the mobile terminal (102) resides in the second addressing area (140), and wherein the second identifier (ID₂) is different from the first identifier (ID₁),
wherein the first addressing area (120) and the second addressing area (140) geographically overlap each other and have an overlapping addressing area (150),
wherein the assigner is configured to assign (210; 220) the first identifier (ID₁) and the second identifier (ID₂) simultaneously to the mobile terminal (102) when it resides in the overlapping addressing area (150).

## Patentansprüche

1. Verfahren (200) zum Identifizieren eines mobilen Endgeräts (102) in einem mobilen Kommunikationssystem (100), wobei das mobile Kommunikationssystem (100) einen ersten Satz (110) einer Vielzahl von Übertragungspunkten (110-1; 110-2; 110-3) zum Kommunizieren mit dem mobilen Endgerät (102) in einem ersten Adressbereich (120), der vom ersten Satz (110) von Übertragungspunkten abgedeckt wird, umfasst, wobei das Verfahren (200) Folgendes umfasst:
Zuweisen (210) einer ersten Kennung (ID₁) zum mobilen Endgerät (102) zum Adressieren des mobilen Endgeräts, das sich im ersten Adressbereich (120) befindet, von jedem der Übertragungspunkte (110-1; 110-2; 110-3), die im ersten Satz (110) von Übertragungspunkten umfasst sind,
wobei das mobile Kommunikationssystem (100) einen zweiten Satz (130) einer Vielzahl von Übertragungspunkten (130-1; 130-2; 130-3) zum Kommunizieren mit dem mobilen Endgerät (102) in einem zweiten Adressbereich (140), der dem ersten Adressbereich (120) benachbart ist, umfasst, wobei das Verfahren (200) ferner Folgendes umfasst:
Zuweisen (220) einer zweiten Kennung (ID₂) zum mobilen Endgerät (102) zum Adressieren des mobilen Endgeräts (102) von jedem der Übertragungspunkte (130-1; 130-2; 130-3), die im zweiten Satz (130) von Übertragungspunkten umfasst sind, wenn sich das mobile Endgerät (102) im zweiten Adressbereich (140) befindet, und wobei sich die zweite Kennung (ID₂) von der ersten Kennung (ID₁) unterscheidet,
wobei der erste Adressbereich (120) und der zweite Adressbereich (140) einander geografisch überlappen und einen überlappenden Adressbereich (150) aufweisen, wobei das Verfahren (200) ferner Folgendes umfasst gleichzeitiges Zuweisen (210; 220) der ersten Kennung (ID₁) und der zweiten Kennung (ID₂) zum mobilen Endgerät (102), wenn es sich im überlappenden Adressbereich (150) befindet.

2. Verfahren (200) nach Anspruch 1, wobei die erste Kennung (ID₁) aus einem Satz von Kennungen zugewiesen wird, der von einem Satz von Kennungen, der im benachbarten zweiten Adressbereich (140) verwendet wird, der mit dem zweiten Satz (130) einer Vielzahl von Übertragungspunkten (130-1; 130-2; 130-3) verknüpft ist, disjunkt ist.

3. Verfahren (200) nach Anspruch 1, das das Ändern eines Übertragungspunkts im ersten Satz (110) von einem ersten Übertragungspunkt des Satzes (110), der mit dem mobilen Endgerät (102) während eines ersten Übertragungszeitintervalls kommuniziert, in einen zweiten Übertragungspunkt des ersten Satzes (110), der mit dem mobilen Endgerät (102) während eines nachfolgenden zweiten Übertragungszeitintervalls kommuniziert, umfasst.

4. Verfahren (200) nach Anspruch 1, wobei der erste Satz (110) und der zweite Satz (130) disjunkte Sätze von Übertragungspunkten bilden.

5. Verfahren (200) nach Anspruch 1, wobei der erste Satz (110) und der zweite Satz (130) überlappende Sätze von Übertragungspunkten bilden, wobei mindestens ein Übertragungspunkt des ersten Satzes oder des zweiten Satzes zu beiden Adressbereichen gehört.

6. Verfahren (200) nach Anspruch 1, das Folgendes umfasst:
während sich das mobile Endgerät (102) im überlappenden Adressbereich (150) befindet,
Informieren (230) der Übertragungspunkte (110-1; 110-2; 110-3), die im ersten Satz (110) umfasst sind, über die zweite Kennung (ID₂) und
Informieren (235) der Übertragungspunkte (130-1; 130-2; 130-3), die im zweiten Satz (130) umfasst sind, über die erste Kennung (ID₁).

7. Verfahren (200) nach Anspruch 1, das Folgendes umfasst:
während sich das mobile Endgerät (102) im überlappenden Adressbereich (150) befindet,
Adressieren des mobilen Endgeräts (102) von einem der Übertragungspunkte (110-1; 110-2; 110-3; 130-1; 130-2; 130-3), die im ersten Satz (110) und/oder im zweiten Satz (130) von Übertragungspunkten umfasst sind, unter Verwendung der ersten Kennung (ID₁) oder der zweiten Kennung (ID₂).

8. Verfahren (200) nach Anspruch 1, das Folgendes umfasst:
nach Verlassen des überlappenden Adressbereichs (150), Informieren (240) der Übertragungspunkte (110-1; 110-2; 110-3) des ersten Adressbereichs (120), dass die zweite Kennung (ID₂) nicht mehr gültig ist, wenn sich das mobile Endgerät (102) im ersten Adressbereich (120) außerhalb des überlappenden Adressbereichs (150) bewegt hat, oder
Informieren (240) der Übertragungspunkte (130-1; 130-2; 130-3) des zweiten Adressbereichs (140), dass die erste Kennung (ID₁) nicht mehr gültig ist, wenn sich das mobile Endgerät (102) im zweiten Adressbereich (140) außerhalb des überlappenden Adressbereichs (150) bewegt hat.

9. Computerprogramm, das einen Programmcode umfasst, der betreibbar ist, das Verfahren (200) nach Anspruch 1 durchzuführen, wenn das Computerprogramm auf einer programmierbaren Hardwarevorrichtung läuft.

10. Einrichtung (160) zum Identifizieren eines mobilen Endgeräts (102) in einem mobilen Kommunikationssystem (100), wobei das mobile Kommunikationssystem (100) einen ersten Satz (110) einer Vielzahl von Übertragungspunkten (110-1; 110-2; 110-3) zum Kommunizieren mit dem mobilen Endgerät (102) in einem ersten Adressbereich (120), der vom ersten Satz (110) von Übertragungspunkten abgedeckt wird, umfasst, wobei die Einrichtung (160) Folgendes umfasst:
einen Zuweiser, der dazu ausgelegt ist, dem mobilen Endgerät (102) eine erste Kennung (ID₁) zum Adressieren des mobilen Endgeräts, das sich im ersten Adressbereich (120) befindet, von jedem der Übertragungspunkte (110-1; 110-2; 110-3), die im ersten Satz (110) von Übertragungspunkten umfasst sind, zuzuweisen (210),
wobei das mobile Kommunikationssystem (100) einen zweiten Satz (130) einer Vielzahl von Übertragungspunkten (130-1; 130-2; 130-3) zum Kommunizieren mit dem mobilen Endgerät (102) in einem zweiten Adressbereich (140), der dem ersten Adressbereich (120) benachbart ist, umfasst,
wobei der Zuweiser dazu ausgelegt ist, dem mobilen Endgerät (102) eine zweite Kennung (ID₂) zum Adressieren des mobilen Endgeräts (102) von jedem der Übertragungspunkte (130-1; 130-2; 130-3), die im zweiten Satz (130) von Übertragungspunkten umfasst sind, zuzuweisen (220), wenn sich das mobile Endgerät (102) im zweiten Adressbereich (140) befindet, und wobei sich die zweite Kennung (ID₂) von der ersten Kennung (ID₁) unterscheidet,
wobei der erste Adressbereich (120) und der zweite Adressbereich (140) einander geografisch überlappen und einen überlappenden Adressbereich (150) aufweisen,
wobei der Zuweiser dazu ausgelegt ist, dem mobilen Endgerät (102) die erste Kennung (ID₁) und die zweite Kennung (ID₂) gleichzeitig zuzuweisen (210; 220), wenn es sich im überlappenden Adressbereich (150) befindet.

## Revendications

1. Procédé (200) pour identifier un terminal mobile (102) dans un système de communication mobile (100), le système de communication mobile (100) comprenant un premier ensemble (110) d'une pluralité de points de transmission (110-1 ; 110-2 ; 110-3) pour communiquer avec le terminal mobile (102) dans une première zone d'adressage (120) couverte par le premier ensemble (110) de points de transmission, le procédé (200) comprenant :
l'attribution (210) d'un premier identifiant (ID₁) au terminal mobile (102) pour adresser le terminal mobile résidant dans la première zone d'adressage (120) à partir de l'un quelconque des points de transmission (110-1 ; 110-2 ; 110-3) constitués par le premier ensemble (110) de points de transmission,
dans lequel le système de communication mobile (100) comprend un second ensemble (130) d'une pluralité de points de transmission (130-1 ; 130-2 ; 130-3) pour communiquer avec le terminal mobile (102) dans une seconde zone d'adressage (140) adjacente à la première zone d'adressage (120), le procédé (200) comprenant en outre :
l'attribution (220) d'un second identifiant (ID₂) au terminal mobile (102) pour adresser le terminal mobile (102) à partir de l'un quelconque des points de transmission (130-1 ; 130-2 ; 130-3) constitués par le second ensemble (130) de points de transmission lorsque le terminal mobile (102) réside dans la seconde zone d'adressage (140) et dans lequel le second identifiant (ID₂) est différent du premier identifiant (ID₁),
dans lequel la première zone d'adressage (120) et la seconde zone d'adressage (140) se chevauchent géographiquement et comportent une zone d'adressage de chevauchement (150), dans lequel le procédé (200) comprend en outre
l'attribution (210 ; 220) du premier identifiant (ID₁) et du second identifiant (ID₂) en même temps au terminal mobile (102) lorsqu'il réside dans la zone d'adressage de chevauchement (150).

2. Procédé (200) selon la revendication 1, dans lequel le premier identifiant (ID₁) est attribué à partir d'un ensemble d'identifiants qui est disjoint d'un ensemble d'identifiants utilisé dans la seconde zone d'adressage adjacente (140) associée au second ensemble (130) d'une pluralité de points de transmission (130-1 ; 130-2 ; 130-3).

3. Procédé (200) selon la revendication 1, comprenant le changement d'un point de transmission dans le premier ensemble (110) passant d'un premier point de transmission de l'ensemble (110) communiquant avec le terminal mobile (102) pendant un premier intervalle de temps de transmission à un second point de transmission du premier ensemble (110) communiquant avec le terminal mobile (102) pendant un second intervalle de temps de transmission ultérieur.

4. Procédé (200) selon la revendication 1, dans lequel le premier ensemble (110) et le second ensemble (130) forment des ensembles disjoints de points de transmission.

5. Procédé (200) selon la revendication 1, dans lequel le premier ensemble (110) et le second ensemble (130) forment des ensembles chevauchants de points de transmission, dans lequel au moins un point de transmission du premier ensemble ou du second ensemble appartient aux deux zones d'adressage.

6. Procédé (200) selon la revendication 1, comprenant :
pendant que le terminal mobile (102) réside dans la zone d'adressage de chevauchement (150),
l'information (230) des points de transmission (110-1 ; 110-2 ; 110-3) constitués par le premier ensemble (110) du second identifiant (ID₂) ; et
l'information (235) des points de transmission (130-1 ; 130-2 ; 130-3) constitués par le second ensemble (130) du premier identifiant (ID₁).

7. Procédé (200) selon la revendication 1, comprenant :
pendant que le terminal mobile (102) réside dans la zone d'adressage de chevauchement (150),
l'adressage du terminal mobile (102) à partir de l'un quelconque des points de transmission (110-1 ; 110-2 ; 110-3 ; 130-1 ; 130-2 ; 130-3) constitués par le premier ensemble (110) et/ou le second ensemble (130) de points de transmission à l'aide du premier identifiant (ID₁) ou du second identifiant (ID₂).

8. Procédé (200) selon la revendication 1, comprenant :
lorsqu'on quitte la zone d'adressage de chevauchement (150),
l'information (240) des points de transmission (110-1 ; 110-2 ; 110-3) de la première zone d'adressage (120) que le second identifiant (ID₂) n'est plus valide si le terminal mobile (102) s'est déplacé dans la première zone d'adressage (120) à l'extérieur de la zone d'adressage de chevauchement (150), ou
l'information (240) des points de transmission (130-1 ; 130-2 ; 130-3) de la seconde zone d'adressage (140) que le premier identifiant (ID₁) n'est plus valide si le terminal mobile (102) s'est déplacé dans la seconde zone d'adressage (140) à l'extérieur de la zone d'adressage de chevauchement (150).

9. Programme d'ordinateur comprenant un code de programme permettant de réaliser le procédé (200) selon la revendication 1, lorsque le programme d'ordinateur est exécuté sur un dispositif matériel programmable.

10. Appareil (160) pour identifier un terminal mobile (102) dans un système de communication mobile (100), le système de communication mobile (100) comprenant un premier ensemble (110) d'une pluralité de points de transmission (110-1 ; 110-2 ; 110-3) pour communiquer avec le terminal mobile (102) dans une première zone d'adressage (120) couverte par le premier ensemble (110) de points de transmission, l'appareil (160) comprenant :
un dispositif d'attribution configuré pour attribuer (210) un premier identifiant (ID₁) au terminal mobile (102) pour adresser le terminal mobile résidant dans la première zone d'adressage (120) à partir de l'un quelconque des points de transmission (110-1 ; 110-2 ; 110-3) constitués par le premier ensemble (110) de points de transmission,
dans lequel le système de communication mobile (100) comprend un second ensemble (130) d'une pluralité de points de transmission (130-1 ; 130-2 ; 130-3) pour communiquer avec le terminal mobile (102) dans une seconde zone d'adressage (140) adjacente à la première zone d'adressage (120),
dans lequel le dispositif d'attribution est configuré pour attribuer (220) un second identifiant (ID₂) au terminal mobile (102) pour adresser le terminal mobile (102) à partir de l'un quelconque des points de transmission (130-1 ; 130-2 ; 130-3) constitués par le second ensemble (130) de points de transmission lorsque le terminal mobile (102) réside dans la seconde zone d'adressage (140) et dans lequel le second identifiant (ID₂) est différent du premier identifiant (ID₁),
dans lequel la première zone d'adressage (120) et la seconde zone d'adressage (140) se chevauchent géographiquement et comportent une zone d'adressage de chevauchement (150), dans lequel le dispositif d'attribution est configuré pour attribuer (210 ; 220) le premier identifiant (ID₁) et le second identifiant (ID₂) en même temps au terminal mobile (102) lorsqu'il réside dans la zone d'adressage de chevauchement (150).
